# EUROPÄISCHE PATENTSCHRIFT

(11) **EP 1 658 194 B1**
(45) Veröffentlichungstag und Bekanntmachung des Hinweises auf die Patenterteilung: **18.06.2008**
(21) Anmeldenummer: 04762420.0
(22) Anmeldetag: 16.07.2004
(51) Int. Cl.: B60N 2/20

(54) **KRAFTFAHRZEUGSITZ**
MOTOR VEHICLE SEAT
SIEGE DE VEHICULE AUTOMOBILE

(30) Priorität: 11.08.2003 DE 10337682
(43) Veröffentlichungstag der Anmeldung: 24.05.2006
(73) Patentinhaber: Brose Fahrzeugteile GmbH & Co. Kommanditgesellschaft, Coburg, 96450 Coburg (DE)
(72) Erfinder: FISCHER, Matthias, 98317 Kronach (DE); HOFMANN, Jochen, 96257 Marktgraitz (DE)
(74) Vertreter: Baumgärtel, Gunnar
(86) Internationale Anmeldenummer: PCT/DE2004/001570
(87) Internationale Veröffentlichungsnummer: WO 2005/014331

(56) Entgegenhaltungen:
- EP-A- 0 404 628
- DE-A1- 10 109 822
- FR-A- 2 781 435
- US-A- 4 726 622
- US-A- 5 997 090

## Beschreibung

Die Erfindung betrifft einen Kraftfahrzeugsitz nach dem Oberbegriff des Anspruchs 1.

Ein solcher Sitz ist zum Beispiel aus DE-A-2 264 509 bekannt.

Ein derartiger Kraftfahrzeugsitz umfasst eine in ihrer Neigung verstellbare, schwenkbar gelagerte Rückenlehne, die eine zum Abstützen des Rückens eines Sitzbenutzers dienende Vorderseite aufweist, sowie eine Federanordnung mit mindestens einem elastischen Element, mit der die Rückenlehne derart elastisch vorgespannt ist, dass sie die Tendenz hat, sich nach vorne zu neigen und sich mit Ihrer Vorderseite an den Rücken des Sitzbenutzers anzulegen. Die Neigung dieser Rückenlehne ist durch Krafteinwirkung auf die Vorderseite der Rückenlehne entgegen der Wirkung der Federanordnung verstellbar. D.h., die Rückenlehne nimmt im entriegelten Zustand der Neigungsverstellung unter der Wirkung der Federanordnung automatisch ihre vorderste Gebrauchsposition ein, in der sie zum Abstützen des Rückens eines Fahrzeuginsassen dient, und lässt sich unter der Einwirkung einer Druckkraft, aufgebracht z.B. durch den Rücken des Sitzbenutzers, in eine stärker nach hinten geneigte Gebrauchsposition verschwenken und in dieser Lage mittels einer Verriegelungseinrichtung arretieren.

Der Erfindung liegt das Problem zugrunde, einen Kraftfahrzeugsitz der eingangs genannten Art weiter zu verbessern.

Dieses Problem wird erfindungsgemäß durch die Schaffung eines Kraftfahrzeugsitzes mit den Merkmalen des Anspruchs 1 gelöst.

Danach greift die Federanordnung an einem Getriebeelement an, das mit der Rückenlehne in Wirkverbindung steht und dem eine Verriegelungseinrichtung zugeordnet ist, mit der das Getriebeelement in einer Mehrzahl unterschiedlicher Lagen verriegelbar ist.

Die erfindungsgemäße Lösung beruht auf dem technischen Prinzip, das Federelement, mit welchem die Rückenlehne in Richtung auf eine nach vorne geneigte Position vorgespannt ist, nicht an der Rückenlehne selbst angreifen zu lassen, sondern vielmehr an einem Getriebeelement, das entweder unmittelbar oder mittelbar über weitere Teile einer Getriebeanordnung mit der Rückenlehne verbunden ist. Dies ermöglicht zum einen eine Übersetzung des an dem Getriebeelement aufgrund der Vorspannkraft der Federanordnung wirkenden Drehmomentes, so dass das an der Rückenlehne selbst wirkende Drehmoment, welches die Tendenz hat, die Rückenlehne nach vorne zu verschwenken, durch Wahl des Übersetzungsverhältnisses gezielt eingestellt werden kann.

Ein wichtiger Vorteil liegt außerdem darin, dass durch die mittelbare Einwirkung der Federanordnung auf die Rückenlehne (über mindestens ein Getriebeelement) das üblicherweise mögliche Vorklappen der Rückenlehne auf die Sitzfläche und spätere Zurückklappen in eine Gebrauchsposition durch die Wirkung des Federelementes nicht beeinflusst wird. Insbesondere ist es beim Zurückklappen der Rückenlehne aus ihrer auf die Sitzfläche vorgeklappten Position in eine aufrechte (gegenüber der Vertikalen ggf. etwas geneigte) Gebrauchsposition nicht erforderlich, die Vorspannkraft der Federanordnung zu überwinden. Das Vorklappen der Rückenlehne kann einerseits erfolgen, um im Bereich des entsprechenden Kraftfahrzeugsitzes zusätzlichen Transportraum zu Verfügung zu stellen, oder andererseits zum Auslösen eines so genannten Easy-Entry-Mechanismus, der bei zweitürigen Kraftfahrzeugen den Einstieg zu einem der Rücksitze erleichtern soll, indem sich der Fahrzeugsitz mit vorgeklappter Rückenlehne in Sitzlängsrichtung in eine vordere Position verschieben lässt.

Das Getriebeelement, an dem die Federanordnung angreift, steht dabei vorzugsweise derart mit der Rückenlehne in Wirkverbindung, dass im verriegelten Zustand der dem Getriebeelement zugeordneten Verriegelungseinrichtung zugleich auch die Rückenlehne in ihrer jeweiligen Schwenkposition (Neigung bezüglich der Vertikalen) arretiert ist und dass im entriegelten Zustand der Verriegelungseinrichtung die Neigung der Rückenlehne verstellbar ist, und zwar entweder unter der Wirkung der Federanordnung nach vorne oder entgegen der Wirkung der Federanordnung nach hinten.

Das Getriebeelement kann dabei einen Bestandteil einer Getriebeanordnung, insbesondere einer Hebelanordnung, bilden, über die die Federanordnung mit der Rückenlehne in Wirkverbindung steht. Durch entsprechende Auslegung der Getriebeanordnung kann ein gewünschtes Übersetzungsverhältnis bei der Übertragung des von der Federanordnung auf das Getriebeelement ausgeübten Momentes auf die Rückenlehne eingestellt werden.

In einer besonders bevorzugten Weiterbildung der Erfindung ist dem mindestens einen Getriebeelement eine Kupplung zugeordnet, mittels der die Rückenlehne von dem Getriebeelement derart entkoppelbar ist, dass die Rückenlehne in Richtung auf die Sitzfläche des Kraftfahrzeugsitzes vorklappbar ist, ohne dass das Getriebeelement bewegt wird. Dies bedeutet zum einen, dass die Rückenlehne bei entsprechender Betätigung der Kupplung von der an dem Getriebeelement angreifenden Federanordnung gekoppelt ist, so dass das Federelement beim Vorklappen der Rückenlehne auf die Sitzfläche sowie einem späteren Zurückklappen der Rückenlehne in eine Gebrauchsposition nicht auf die Rückenlehne einwirkt.

Die Entkopplung der Rückenlehne von dem Getriebeelement wird nach einer Erfindungsvariante dadurch ermöglicht, dass die Schwenkachse der Rückenlehne beim Vorklappen der Rückenlehne auf die Sitzfläche (und ebenso beim anschließenden Zurückklappen in eine Gebrauchsposition) entlang einer durch eine Führungseinrichtung für die Schwenkachse vorgegebenen Bahnen geführt wird, welche derart gewählt ist, dass durch die Bewegung der Schwenkachse entlang der Bahn eine ansonsten mögliche Rückwirkung der Schwenkbewegung der Rückenlehne auf das Getriebeelement kompensiert (aufgehoben) wird.

Nach einer anderen Erfindungsvariante wird das Getriebeelement bei Betätigung der Kupplungseinrichtung mit der Rückenlehne vollständig außer Eingriff gebracht, so dass das Getriebeelement weder unmittelbar noch mittelbar (über weitere Bauelemente) mit der Rückenlehne in Verbindung steht. Diese Erfindungsvariante kann beispielsweise in der Art realisiert werden, dass das Getriebeelement (und ggf. weitere Elemente der Getriebeanordnung, über die das Getriebeelement mit der Rückenlehne in Verbindung steht) auf einer Basisplatte angeordnet sind, die derart bewegbar, insbesondere um eine Achse verschwenkbar ist, dass das Getriebeelement außer Eingriff mit der Rückenlehne gerät. Dabei ist die Basisplatte vorzugsweise elastisch in Richtung auf den Zustand vorgespannt, in dem das Getriebeelement mit der Rückenlehne in Verbindung steht, und muss entgegen dieser Vorspannung bewegt (verschwenkt) werden, um Getriebeelement und Rückenlehne außer Eingriff zu bringen.

Zum Bewegen, d.h. insbesondere zum Verschwenken, der Basisplatte ist ein mit der Basisplatte zusammenwirkendes Verstellelement in Form eines in einem Langloch der Basisplatte geführten Verstellhebels vorgesehen.

In einer Weiterbildung der Erfindung sind ferner Sperrmittel vorgesehen, mit denen die -Kupplung sowohl in dem Zustand verriegelbar ist, indem das Getriebeelement mit der Rückenlehne gekoppelt ist, als auch in dem Zustand, in dem das Getriebeelement von der Rückenlehne entkoppelt ist.

Bei der erstgenannten Erfindungsvariante werden die Sperrmittel vorzugsweise durch einen schwenkbar gelagerten Verriegelungshebel gebildet, der im verriegelten Zustand an der Schwenkachse angreift und deren Bewegung entlang der durch die Führungseinrichtung definierten Bahn verhindert.

Bei der zweiten Erfindungsvariante werden die Sperrmittel vorzugsweise durch das vorstehend beschriebene Verstellelement in Form eines Verstellhebels gebildet, das auch zum Bewegen (Verschwenken) der Basisplatte dient und vorzugsweise mittels eines elastischen Elementes in Richtung auf den verriegelten Zustand vorgespannt ist.

Die dem Getriebeelement zugeordnete Verriegelungseinrichtung kann in bekannter Weise durch ein so genanntes primäres Verriegelungselement gebildet werden, welches im verriegelten Zustand eine Bewegung des Getriebeelementes blockiert, sowie durch ein sekundäres Verriegelungselement, welches wiederum das primär Verriegelungselement im verriegelten Zustand blockiert und zur Entriegelung der Verriegelungseinrichtung entgegen einer Vorspannkraft oder ein sonstigen in Richtung auf den verriegelten Zustand wirkenden Kraft betätigt werden muss.

Das Getriebeelement, auf das die der Rückenlehne zugeordnete Federanordnung erfindungsgemäß einwirkt, wird in einer bevorzugten Ausführungsform der Erfindung durch einen Zahnsegmenthebel gebildet, dessen Verzahnung mit einer zugeordneten Verzahnung des primären Verriegelungselementes in Eingriff bringbar ist.

Weitere Merkmale und Vorteile der Erfindung werden bei der nachfolgenden Beschreibung von Ausführungsbeispielen anhand der Figuren deutlich werden.

Es zeigen:
- Figuren 1a und 1b: eine perspektivische Darstellung und eine Seitenansicht eines Kraftfahrzeugsitzes mit einer in ihrer Neigung verstellbaren sowie zusätzlich auf die Sitzfläche vorklappbaren Rückenlehne mit variabler Schwenkachse;
- Figur 2: eine Detaildarstellung des Kraftfahrzeugsitzes aus den Figuren 1a und 1b im Bereich der Anbindung der Rückenlehne an das Sitzuntergestell zur Darstellung der Mittel, die die Neigungseinstellung sowie das Vorklappen der Rückenlehne ermöglichen;
- Figur 3: eine Abwandlung des Ausführungsbeispiels aus Figur 2 hinsichtlich der Mittel, die die Neigungseinstellung sowie das Vorklappen der Rückenlehne um eine variable Schwenkachse ermöglichen;
- Figur 4: ein zweites Ausführungsbeispiel eines Kraftfahrzeugsitzes mit einer in ihrer Neigung verstellbaren sowie außerdem auf die Sitzfläche vorklappbaren Rückenlehne, welche eine örtlich unveränderliche Drehachse aufweist;
- Figuren 5a bis 5c: eine Detaildarstellung des Kraftfahrzeugsitzes aus Figur 4 im Bereich der Anbindung der Rückenlehne an das Sitzuntergestell zur Darstellung der Mittel zur Neigungseinstellung sowie zum Vorklappen der Rückenlehne bei drei unterschiedlichen Einstellungen der Neigung;
- Figuren 6a bis 6c: Detaildarstellungen gemäß den Figuren 5a bis 5c beim Vorklappen der Rückenlehne auf die Sitzfläche;
- Figur 7: eine Abwandlung des Mechanismus aus den Figuren 6a bis 6c, wobei die Rückenlehne in ihrer vorgeklappten Position nicht verriegelbar ist;
- Figur 8: eine zweite Abwandlung des Mechanismus aus den Figuren 6a bis 6c, wobei ein separater Verriegelungsmechanismus für die vorgeklappte Rückenlehne vorgesehen ist.

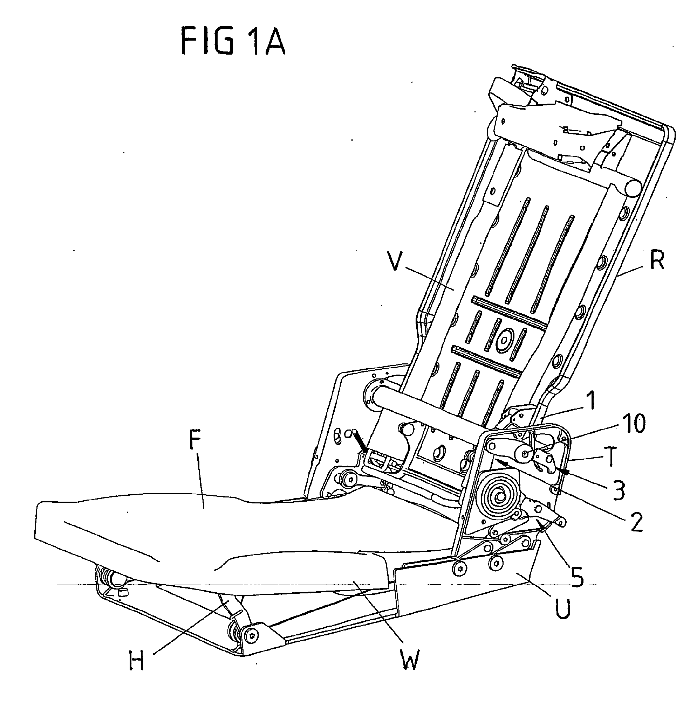

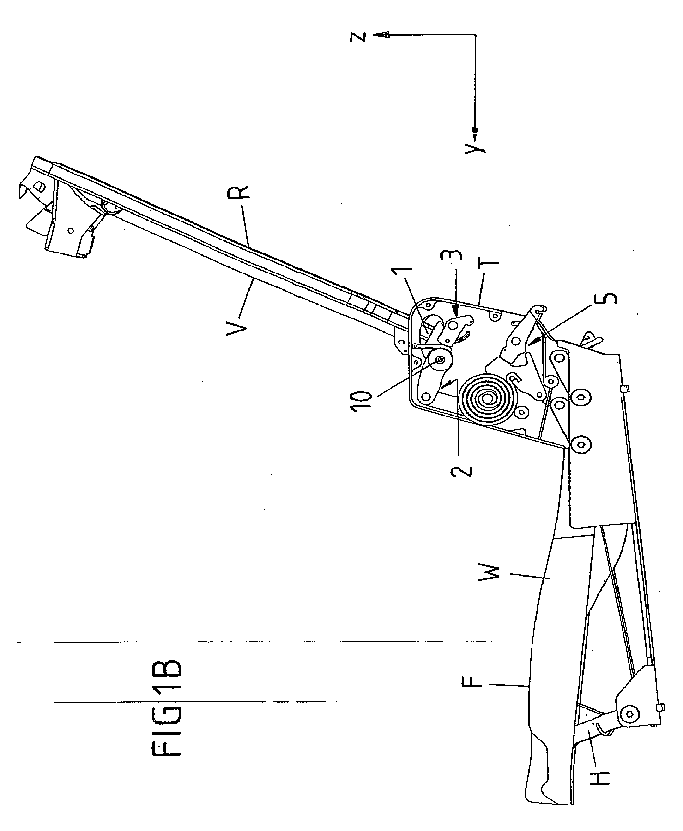

In den Figuren 1a und 1b ist ein Kraftfahrzeugsitz dargestellt, der ein Sitzuntergestell U umfasst, das einerseits eine mittels einer Einstellvorrichtung H höhen- und neigungsverstellbare Sitzwanne B trägt, die eine Sitzfläche F für einen Sitzbenutzer definiert, und an dem andererseits eine Tragplatte T befestigt ist, an der verschwenkbar eine Rückenlehne R angelenkt ist, die eine zum Abstützen des Rückens eines Sitzbenutzers dienende Vorderseite V aufweist. Dabei wird die eigentliche Sitzfläche des Kraftfahrzeugsitzes nicht durch die Sitzwanne W gebildet, sondern vielmehr durch ein auf der Sitzwanne anzuordnendes Sitzpolster. Die jeweilige Höhen- und Neigungseinstellung der Sitzwanne W definiert dabei aber die Lage der Sitzfläche F. In entsprechender Weise ist an der Rückenlehne R auf der Vorderseite V ein Lehnenpolster anzuordnen, an das sich ein Sitzbenutzer mit seinem Rücken anlehnen kann.

Der in Figur 1a dargestellte Kraftfahrzeugsitz lässt sich einerseits in seiner Neigung bezüglich der vertikalen Fahrzeugachse z verstellen, so dass die Rückenlehne R eine Mehrzahl unterschiedlicher Gebrauchspositionen einnehmen kann, in denen sie jeweils zum Abstützen des Rückens eines Sitzbenutzers dient, jedoch jeweils eine unterschiedliche Neigung bezüglich einer vorgegebenen Vertikalen (beispielsweise der vertikalen Fahrzeugachse z bei einem in ein Kraftfahrzeug eingebauten Sitz) aufweist. Darüber hinaus lässt sich die Rückenlehne R auf die Sitzfläche F des Kraftfahrzeugsitzes vorklappen, so dass oberhalb der Rückenlehne R zusätzlicher Transportraum zu Verfügung gestellt wird bzw. der Sitz im Rahmen einer so genannten Easy-Entry-Funktion in Fahrzeuglängsrichtung x nach vorne verschoben werden kann.

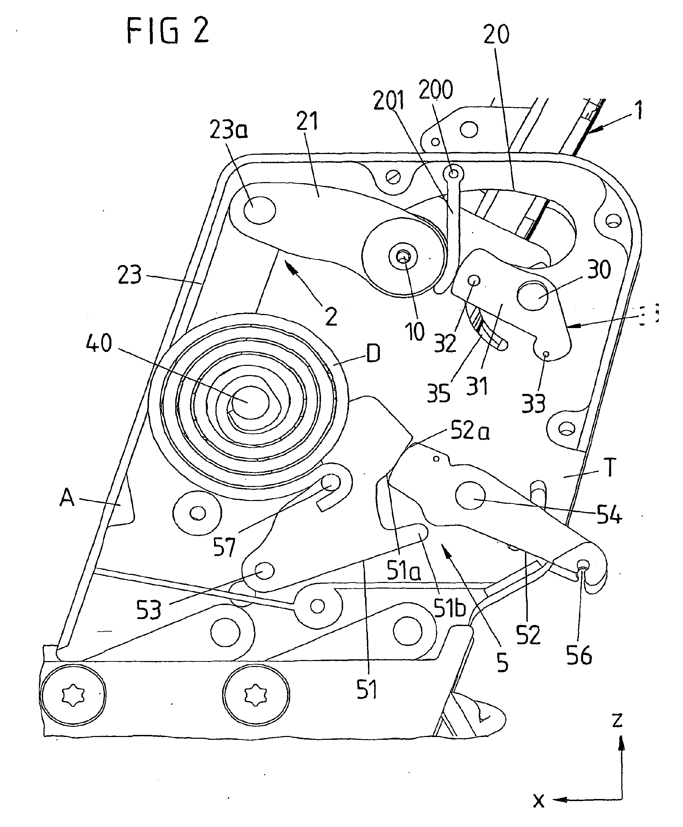

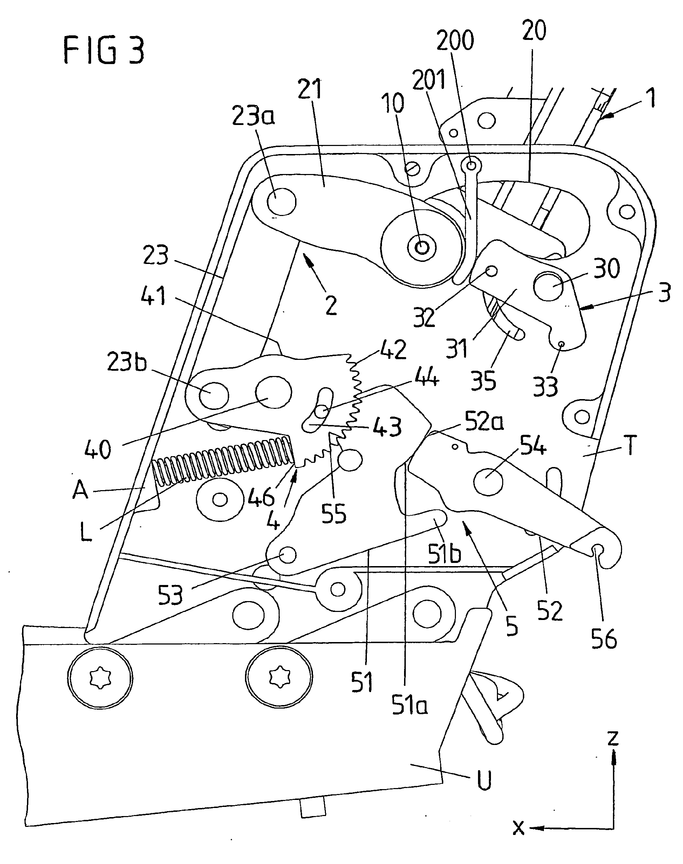

In den Figuren 2 und 3 sind zwei unterschiedliche Ausführungsformen der Mittel 1 bis 5 dargestellt, die die Neigungsverstellung der Rückenlehne R sowie deren Vorklappen auf die Sitzfläche F ermöglichen, und die jeweils an der Tragplatte T angeordnet sind. Dabei zeigt Figur 2 eine Anordnung, wie sie auch am Lehnenbeschlag des Fahrzeugsitzes aus den Figuren 1a und 1b erkennbar ist und Figur 3 zeigt eine Abwandlung dieser Anordnung. Nachfolgend wird zunächst auf die Figur 3 dargestellte Anordnung eingegangen.

Figur 3 zeigt einen Lehnenbeschlag 1, der ein Bestandteil des Lehnengestells der in den Figuren 1a und 1b dargestellten Rückenlehne R eines Kraftfahrzeugsitzes bildet und der im Bereich seines entlang der vertikalen Fahrzeugachse z unteren Endes einer Schwenkachse in Form eines Lagerzapfens 10 aufweist, über den der Lehnenbeschlag 1 schwenkbar an einer Gestellbaugruppe T in Form einer Tragplatte des Sitzgestells gelagert ist. Der Lagerzapfen 10 des Lehnenbeschlages 1 ist in einer Führungskulisse 20 der Tragplatte T verschiebbar gelagert, so dass der Lagerzapfen 10 und damit die Schwenkachse des Lehnenbeschlages 1 durch Verschiebung entlang der Führungskulisse 20 zwischen den beiden Enden der Führungskulisse 20 bewegt werden können.

In dem in Figur 3 dargestellten Zustand wird eine solche Bewegung des Lagerzapfens 10 entlang der Führungskulisse 20 durch einen Hebelarm 31 eines an einer Lagerstelle 30 der Tragplatte T schwenkbar gelagerten Verriegelungshebels 3 verhindert, der über ein um eine Achse 200 verschwenkbares Zwischenglied 201 auf den Lagerzapfen 10 einwirkt und diesen im Bereich des ersten Endes in der Führungskulisse 20 fixiert. Hierdurch ist eine kombinierte Schwenk- und Verschiebebewegung des Lagerzapfens 10 in der Führungskulisse 20 unmöglich.

Der Verriegelungshebel 3 ist dabei vorzugsweise mittels eines elastischen Elementes, das an einem Angriffspunkt 33 des Verriegelungshebels 3 angreift, in Richtung auf den in Figur 3 dargestellten Zustand vorgespannt, indem er eine Verschiebung des Lagerzapfens 10 in der Führungskulisse 20 entgegenwirkt. Der Verriegelungshebel 3 wirkt dabei über das Zwischenglied 201 nicht unmittelbar auf den Lagerzapfen 10 ein, sondern vielmehr auf einen Hebel 21 einer Getriebeanordnung 2, 4, an dem der Lagerzapfen 10 aufgenommen ist. Die Funktion der Getriebeanordnung 2, 4 wird weiter unten noch erläutert werden.

Zur Freigabe des Lagerzapfens 10 in der Führungskulisse 20 muss der Verriegelungshebel 3 verschwenkt werden, so dass er nicht mehr auf das Zwischenglied 201 einwirkt. Bei einer solchen Schwenkbewegung wird der Verriegelungshebel 3 mit einem Stift 32 in einer Führungskulisse 35 der Tragplatte T geführt.

Der Schwenkhebel 21, in dem der Lagerzapfen 10 des Lehnenbeschlages 1 aufgenommen ist, ist über einen Koppelhebel 23 mit einem Zahnsegmenthebel 41 der Getriebeanordnung 2, 4 gekoppelt, der ein Getriebeelement 4 bildet, an dem eine Druckfeder L angreift. Der Koppelhebel 23 ist hierzu an seinem einen, oberen Ende 23a mit dem Schwenkhebel 21 und mit seinem anderen, unteren Ende 23b mit dem Zahnsegmenthebel 41 gelenkverbunden. Der Zahnsegmenthebel 41 ist um eine an der Tragplatte T vorgesehene Lagerstelle 40 verschwenkbar und weist eine Außenverzahnung 42 auf, die mit einer Verriegelungseinrichtung 5 derart in Eingriff steht, dass eine Schwenkbewegung des Zahnsegmenthebels 41 in dem in Figur 3 gezeigten Zustand nicht möglich ist.

Der Zahnsegmenthebel 41 weist darüber hinaus eine Kulisse 43 auf, in die ein an der Tragplatte T vorgesehener Zapfen 44 eingreift und die somit der Begrenzung des möglichen Schwenkbereiches des Zahnsegmenthebels 41 dient.

Die dem Zahnsegmenthebel 41 zugeordnete Verriegelungseinrichtung 5 umfasst ein primäres Verriegelungselement 51, das als Verriegelungshebel um eine an der Tragplatte T vorgesehene Lagerstelle 53 verschwenkbar ist und das einen Verzahnungsbereich 55 aufweist, der in den Verzahnungsbereich 42 des Zahnsegmenthebels 41 eingreift, um diese zu arretieren. Dem primären Verriegelungselement 51 zugeordnet ist ein ebenfalls als Verriegelungshebel ausgebildetes, um eine weitere Lagerstelle 54 verschwenkbares Verriegelungselement 52, das mit einem Anschlag 52a an einem zugeordnete Anschlag 51 a des primären Verriegelungselementes 51 anliegt und dadurch eine Schwenkbewegung des primären Verriegelungselementes 51 verhindert, die die Verzahnung 42 des Zahnsegmenthebels 41 freigäbe.

An dem sekundären Verriegelungselement 52 ist eine Kraftangriffsstelle 56 vorgesehen, an der eine Kraft eingeleitet werden kann, die zu einem Verschwenken des sekundären Verriegelungselementes 52 führt, so dass die einander zugeordneten Anschläge 51 a, 52a der beiden Verriegelungselemente 51, 52 außer Eingriff geraten. Für das Auslösen der entsprechenden Schwenkbewegung des sekundären Verriegelungselementes 52 können unterschiedliche physikalische bzw. technische Prinzipien verwendet werden, beispielsweise ein Aktor in Form eines Elektromagneten oder eines Elektromotors oder alternativ eine manuelle Betätigungseinrichtung usw..

Beim Verschwenken des sekundären Verriegelungselementes 52 wirkt dieses auf einen Fortsatz 51 b des primären Verriegelungselementes 51 ein und bewirkt dadurch eine Schwenkbewegung des primären Verriegelungselementes 51 um die zugeordnete Schwenkachse (Lagerstelle 53), durch die dessen Verzahnung 55 mit der zugeordneten Verzahnung 42 des Zahnsegmenthebels 41 außer Eingriff gerät.

Auf den Zahnsegmenthebel 41 wirkt ferner eine Linearfeder L in Form einer als Schraubenfeder ausgebildeten Druckfeder ein, die sich mit einem Ende an einem Anschlag A der Tragplatte T und mit dem anderen Ende an einer Anschlagsfläche 46 des Zahnsegmenthebels 41 abstützt. Die Druckfeder L hat die Tendenz den Zahnsegmenthebel 41 entgegen dem Uhrzeigersinn zu verschwenken, was aufgrund der Kopplung des Zahnsegmenthebels 41 über die beiden weiteren. Hebel 21, 23 der Getriebeanordnung 2, 4 zu einer Schwenkbewegung des Lehnenbeschlages 1 ebenfalls entgegen dem Uhrzeigersinn führt, so dass die Rückenlehne R (vgl. Figuren 1a und 1b) die Tendenz hat, sich nach vorne zu neigen, also mit ihrer Vorderseite V an den Rücken eines Sitzbenutzers zu legen. Die vorbeschriebene Bewegung des Zahnsegmenthebels 41 sowie des Lehnenbeschlages 1 (und damit der Rückenlehne R) wird jedoch in dem in Figur 3 dargestellten Zustand der Getriebeanordnung 2, 4 dadurch verhindert, dass die Verriegelungseinrichtung 5 sich im verriegelten Zustand befindet und daher eine Schwenkbewegung des Zahnsegmenthebels 41 verhindert.

Zur Verstellung der Neigung des Lehnenbeschlages 1 und damit der Rückenlehne R muss daher zunächst die Verriegelungseinrichtung 5 durch Einwirkung auf die Kraftangriffsstelle 56 des sekundären Verriegelungselementes 52 entriegelt werden, so dass die Verzahnung 55 des primären Verriegelungselementes 51 außer Eingriff mit der zugeordneten Verzahnung 42 des Zahnsegmenthebels 41 gerät und diesen nicht mehr arretiert. Sodann verschwenkt der Zahnsegmenthebel 41 unter der Wirkung der Druckfeder L automatisch derart, dass er über die beiden weiteren Hebel 21, 23 der Getriebeanordnung 2, 4 eine Schwenkbewegung des Lehnenbeschlages 1 und damit der Rückenlehne insgesamt nach vorne, in Richtung auf den Rücken eines Sitzbenutzers bewirkt. Diese Schwenkbewegung kommt allerdings nur dann zustande, wenn der Sitzbenutzer nicht mit seinem Rücken an der Vorderseite V der Rückenlehne R (vgl. Figuren 1a und 1b) anliegt. Im letztgenannten Fall würde die Schwenkbewegung durch die vom Sitzbenutzer auf die Vorderseite V der Rückenlehne R ausgeübte Gegenkraft begrenzt bzw. verhindert.

Umgekehrt kann nach der Entriegelung der Verriegelungseinrichtung 5 und damit der Freigabe des Zahnsegmenthebels 41 auch ein Verschwenken der Rückenlehne R nach hinten ausgelöst werden, indem der Sitzbenutzer mit seinem Rücken gegen die Vorderseite V der Rückenlehne R drückt, um diese nach hinten zu neigen. Dies führt zu einer Schwenkbewegung des Lehnenbeschlages 1 (zusammen mit der Rückenlehne R) im Uhrzeigersinn und hat - wegen der Kopplung des Zahnsegmenthebels 41 an den Lehnenbeschlag 1 über die Hebel 21, 23 - eine entsprechende Schwenkbewegung des Zahnsegmenthebels 41 im Uhrzeigersinn zur Folge. Diese Schwenkbewegung erfolgt entgegen der Druckkraft (Vorspannkraft) der Druckfeder L. D.h., der Sitzbenutzer muss bei der Einwirkung auf die Vorderseite V der Rückenlehne R dasjenige Moment überwinden, das durch die Einwirkung der Druckfeder L auf den Zahnsegmenthebel 41 erzeugt wird. Dabei kann die Getriebeanordnung 41 in Form einer Hebelanordnung eine Übersetzung dieses Momentes bewirken, so dass das von der Druckfeder L indirekt auf den Lehnenbeschlag 1 ausgeübte Drehmoment verschieden ist von dem durch die Druckfeder L auf den Zahnsegmenthebel 41 ausgeübte Moment.

Zusätzlich kann in dem in Figur 3 gezeigten Zustand, in dem der Lehnenbeschlag 1 und damit die Rückenlehne des Sitzes in einer bestimmten Neigungsposition (mittels der Verriegelungseinrichtung 5) arretiert sind, ein Vorklappen der Rückenlehne R auf die Sitzfläche F des in den Figuren 1a und 1b dargestellten Kraftfahrzeugsitzes ausgelöst werden, indem der mit einem Lehnenentriegelungsknopf gekoppelte Verriegelungshebel 3 durch Betätigung des Lehnenentriegelungsknopfes derart entgegen dem Uhrzeigersinn verschwenkt wird, dass er nicht mehr über das Zwischenglied 201 über den Schwenkhebel 21 einwirkt, an dem der Lagerzapfen 10 des Lehnenbeschlages 1 angeordnet ist. Nach dem Entriegeln des Lagerzapfens 10 und somit der Schwenkachse des Lehnenbeschlages 1 kann nun die Rückenlehne R zusammen mit dem Lehnenbeschlag 1 in Richtung auf die Sitzfläche F des Fahrzeugs vorgeklappt werden, indem die Rückenlehne R von einer Person ergriffen und zu der Sitzfläche F hin umgeklappt wird. Bei dieser Klappbewegung der Rückenlehne R und des Lehnenbeschlages 1 bewegt sich der Lagerzapfen 10, der die jeweils momentane Schwenkachse des Lehnenbeschlages 1 beim Vorklappen definiert, in der Führungskulisse 20 zwischen deren beiden endseitigen Anschlägen. Die Bewegung des Lagerzapfens 10 in der Führungskulisse 20 wird dabei durch den Schwenkhebel 21 und den Koppelhebel 23 gesteuert, über die der Lehnenbeschlag 1 mit dem Zahnsegmenthebel 41 gekoppelt ist. Da der Zahnsegmenthebel 1 beim Vorklappen der Rückenlehne R bzw. des Lehnenbeschlages 1 mittels der zugeordneten Verriegelungseinrichtung 5 verriegelt ist, ist der Lehnenbeschlag 1 beim Vorklappen über Schwenkhebel 21 und den Koppelhebel 23 an ein gestellfestes (bezüglich der Tragplatte T nicht bewegliches) Element gekoppelt.

Insgesamt bewegt sich der Lagerzapfen 10 beim Vorklappen der Rückenlehne R ausgehend von dem in Figur 3 dargestellten Zustand zunächst von dem ersten Ende der Führungskulisse 20 zu deren anderem, zweiten Ende und dann wieder zurück zu dem ersten Ende. Bei komplett vorgeklapptem Lehnenbeschlag 41 und damit oberhalb der Sitzfläche F liegender Rückenlehne R befindet sich somit der Lagerzapfen 10 wieder an derselben Stelle, wie bei Beginn der Klappbewegung (Figur 3) und kann dort mittels des Verriegelungshebels 3 arretiert werden.

Bei einem späteren, erneuten Hochklappen der Rückenlehne aus der auf die Sitzfläche F vorgeklappten Lage in eine Gebrauchsposition, entsprechend einer im Wesentlichen aufrechten Lage mit einer - wie weiter vorne beschrieben - einstellbaren Neigung gegenüber der vertikalen Fahrzeugachse z, kommt es wiederum zu der vorstehend erläuterten Bewegung des Lagerzapfens 10 in der Führungskulisse 20 der Tragplatte T.

Von besonderer Bedeutung ist vorliegend, dass weder beim Vorklappen der Rückenlehne noch bei einem späteren Zurückklappen der Rückenlehne in eine Gebrauchsposition die an dem Zahnsegmenthebel 41 angreifende Druckfeder L auf den Lehnenbeschlag 1 (und damit die Rückenlehne R) einwirkt. Denn der Zahnsegmenthebel 41 ist bei dieser Klappbewegung mittels der Verriegelungseinrichtung 5 arretiert und wirkt als ein gestellfestes Element der Tragplatte T. Der Schwenkhebel 21 und der Koppelhebel 23 der Hebelanordnung 2, 4 sind dabei derart ausgebildet, dass sie bei einem Vorklappen des Lehnenbeschlages 1 und damit einer entsprechenden Schwenkbewegung des am Schwenkhebel 21 angeordneten Lagerzapfens 10 gerade die gewünschte Hin- und Herbewegung des Lagerzapfens 10 in der Führungskulisse 20 bewirken. Die beiden Hebel 21. 23 gleichen also die Schwenkbewegung der Rückenlehne R und damit des Lehnenbeschlages 1 im Zusammenspiel mit der Führungskulisse 20 derart aus, dass diese Klappbewegung bei verriegeltem Zahnsegmenthebel 41 durchgeführt werden kann.

Beim Vorklappen der Rückenlehne R auf die Sitzfläche F sowie einem späteren Zurückklappen der Rückenlehne R in eine Gebrauchsposition, in der sie zum Abstützen des Rückens eines Fahrzeuginsassen dienen kann, sind somit Rückenlehne R und Lehnenbeschlag 1 insofern von der Druckfeder L entkoppelt, als diese Feder die Klappbewegung in keiner Weise beeinflusst. Dies wird dadurch ermöglicht, dass die Klappbewegung bei arretiertem Zahnsegmenthebel 41 erfolgt, wobei der Lagerzapfen 10 in der -Führungskulisse 20 unter Steuerung durch den Schwenkhebel 21 und den Koppelhebel 23 die erforderliche Ausgleichsbewegung (Kompensationsbewegung) durchführt, die ein Verschwenken des Lehnenbeschlags 1 bei verriegeltem Zahnsegmenthebel 41 zulässt.

Figur 2 zeigt eine Abwandlung der Anordnung aus Figur 3, wobei der Unterschied darin besteht, dass die Linearfeder L in Form einer Druckfeder durch eine Drehfeder D in Form einer Spiralfeder ersetzt ist, die einerseits an der Lagerstelle 40 des Zahnsegmenthebels 41 und andererseits am Deckel der Tragplatte T mittels eines Bolzens 57 angreift.

Die Drehfeder D hat bei der in Figur 2 dargestellten Anordnung dieselbe Funktion wie die Linearfeder L in Figur 3 dargestellt. Sie spannt den Zahnsegmenthebel 41 im Uhrzeigersinn vor, so dass dieser die Tendenz hat, den Lehnenbeschlag 1 und damit die Rückenlehne R (vgl. Figuren 1a und 1b) entgegen dem Uhrzeigersinn nach vorne zu verschwenken, wenn der Zahnsegmenthebel 41 nicht mittels der Verriegelungsvorrichtung 5 verriegelt ist. Ein Verschwenken der Rückenlehne R nach hinten muss daher entgegen der Vorspannkraft der Drehfeder D erfolgen.

Im Übrigen stimmt das in Figur 2 dargestellte Ausführungsbeispiel mit dem anhand Figur 3 erläuterten überein.

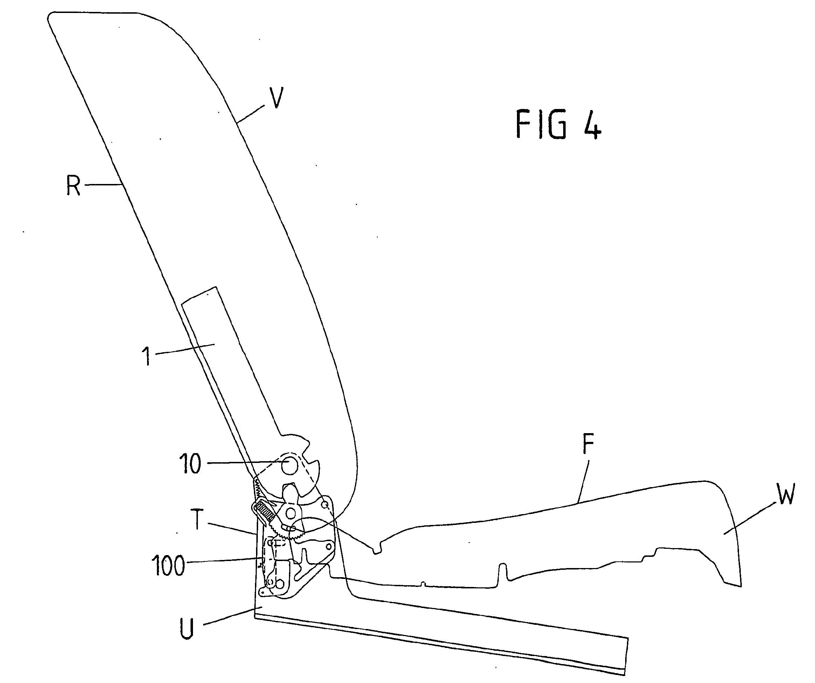

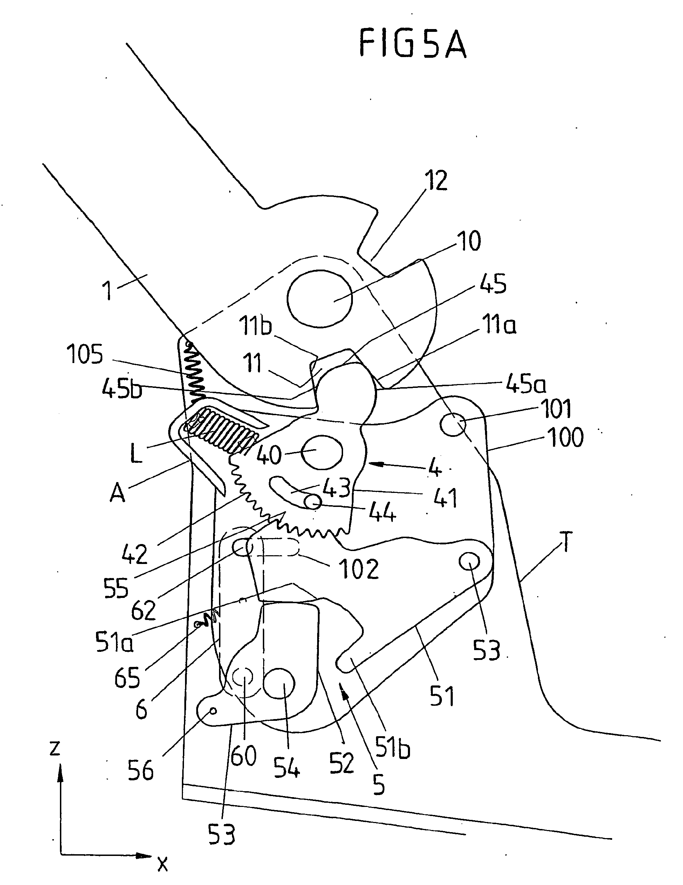

Figur 4 zeigt eine Abwandlung des anhand der Figuren 1a und 1b dargestellten Kraftfahrzeugsitzes, wobei ein Unterschied darin besteht, dass vorliegend die zur Neigungseinstellung der Rückenlehne R sowie zum Vorklappen der Rückenlehne R auf die Sitzfläche F dienenden Baugruppen nicht unmittelbar auf der Tragplatte T des Sitzuntergestells U sondern auf einer schwenkbar an der Tragplatte T angeordneten Basisplatte 100 gelagert sind, wie nachfolgend anhand Figur 5a näher erläutert werden wird.

Ein wesentlicher Unterschied der in Figur 5a dargestellten Anordnung, verglichen mit den in den Figuren 2 und 3 gezeigten Anordnungen, besteht darin, dass der Lagerzapfen 10 und damit die Schwenkachse des Lehnenbeschlages 1 nicht längsbeweglich in einer Führungskulisse angeordnet sind, sondern vielmehr an einer definierten Lagerstelle der Tragplatte T, so dass also der Lehnenbeschlag 1 mittels des Lagerzapfens 10 um eine ortsfeste Schwenkachse verschwenkt werden kann, die Schwenkachse aber nicht räumlich veränderlich ist.

Ein weiterer wichtiger Unterschied besteht darin, dass der Zahnsegmenthebel 41, auf den eine an einem Anschlag A der Basisplatte 100 abgestützte Linearfeder L in Form einer als Schraubenfeder ausgebildeten Druckfeder einwirkt, nicht auf der Tragplatte T gelagert ist, sondern um eine Lagerstelle 40 verschwenkbar auf einer Basisplatte 100, die wiederum um eine Lagerstelle 101 verschwenkbar an der Tragplatte T gelagert ist. Auf dieser Tragplatte sind weiterhin auch das primäre Verriegelungselement 51 und das sekundäre Verriegelungselement 52 der Verriegelungseinrichtung 5 angeordnet, die in der anhand Figur 3 beschriebenen Weise mit dem Zahnsegmenthebel 41 zusammenwirkt.

Der Zahnsegmenthebel 41 ist zudem vorliegend nicht über Hebelelemente einer Getriebeanordnung sondern vielmehr unmittelbar mit dem Lehnenbeschlag 1 der Rückenlehne R (vgl. Figur 4) gekoppelt, indem der Zahnsegmenthebel 41 mit einem evolventenartig ausgebildeten Hebelabschnitt 45 in eine zugeordnete Ausnehmung 11 des Lehnenbeschlages 1 eingreift.

Der Eingriff der evolventenartig ausgebildeten Oberfläche 45a, 45b des besagten Hebelabschnittes 45 in die zugeordnete Aussparung 11 des Lehnenbeschlages 1 ist dadurch gewährleistet, dass die Basisplatte 100 mittels eines Federelementes 105 in Form einer Zugfeder, die mit einem Ende an der Tragplatte T und mit dem anderen Ende an der Basisplatte 100 befestigt ist, elastisch in eine Schwenkposition vorgespannt ist, in der sich der Zahnsegmenthebel 41 unmittelbar unterhalb des unteren Endes des Lehnenbeschlages 1 befindet und so mit seinem hierfür vorgesehenen Hebelabschnitt 45 in die zugeordnete Ausnehmung 11 des Lehnenbeschlages 1 eingreifen kann. Die Basisplatte 100 ist dabei mittels eines schwenkbar an einer Lagerstelle 60 der Tragplatte T angelenkten Sperrhebels 6 in der Position fixiert, in der der evolventenartige Abschnitt 45 des Zahnsegmenthebels 41 in die zugeordnete Aussparung 11 des Lehnenbeschlages 1 eingreifen kann. Der Sperrhebel 6 ist hierzu mit einem Führungselement 62 in einer Führung der Basisplatte 100 in Form eines Langloches 102 geführt und mittels eines Federelementes 65 derart elastisch vorgespannt, dass das Führungselement 62 an einem Ende des Langloches 102 anliegt und hierdurch eine Schwenkbewegung der Basisplatte 100 um ihre Lagerstelle 101 verhindert, die den evolventenartigen Hebelabschnitt 45 außer Eingriff mit der zugeordneten Ausnehmung 101 des Lehnenbeschlages 1 bringen würde.

Anhand Figur 5a ist ferner erkennbar, dass sich der evolventenartige Hebelabschnitt 45 mit jeweils einem Oberflächenbereich 45a, 45b an jeweils einer von zwei einander gegenüberliegenden Begrenzungswänden 11a bzw. 11b der zugeordneten Aussparung 11 des Lehnenbeschlages 1 abstützt. Hierdurch ist der Lehnenbeschlag 1 in der in Figur 5a dargestellten Neigungsposition arretiert, in der der Lehnenbeschlag 1 und damit die Rückenlehne R gegenüber der vertikalen Fahrzeugachse z (bezogen auf den in ein Kraftfahrzeug eingebauten Zustand) leicht nach hinten geneigt sind. Eine Verstellung der Neigung des Lehnenbeschlages 1 (und damit der Rückenlehne R) aus dieser Position heraus ist so lange unmöglich, wie der Zahnsegmenthebel 41 mittels der Verriegelungseinrichtung 5 in einer definierten Lage arretiert ist.

Für eine Änderung der Neigung des Lehnenbeschlages 1 muss daher zunächst die Verriegelungseinrichtung 5 in der anhand der Figuren 2 und 3 beschriebenen Weise entriegelt werden, so dass die Verzahnung 55 des primären Verriegelungselementes 51 außer Eingriff mit der zugeordneten Verzahnung 42 des Zahnsegmenthebels 41 gerät. Der Zahnsegmenthebel 41 hat dann die Tendenz unter der Wirkung der (bei nach hinten geneigter Rückenlehne gemäß Figur 5a stark zusammengedrückten) Druckfeder L eine Schwenkbewegung (entgegen dem Uhrzeigersinn) auszuführen, wobei sie mit der Oberfläche 45a, 45b des evolventenartigen Abschnittes 45 auf die einander gegenüberliegenden Wandabschnitte 11a, 11b der zugeordneten Ausnehmung 11 einwirkt und eine Schwenkbewegung des Lehnenbeschlages 1 (im Uhrzeigersinn) auslöst, die zu einer Neigungsverstellung des Lehnenbeschlages 1 (und damit der Rückenlehne R) nach vorne in Richtung auf den Rücken eines Sitzbenutzers führt.

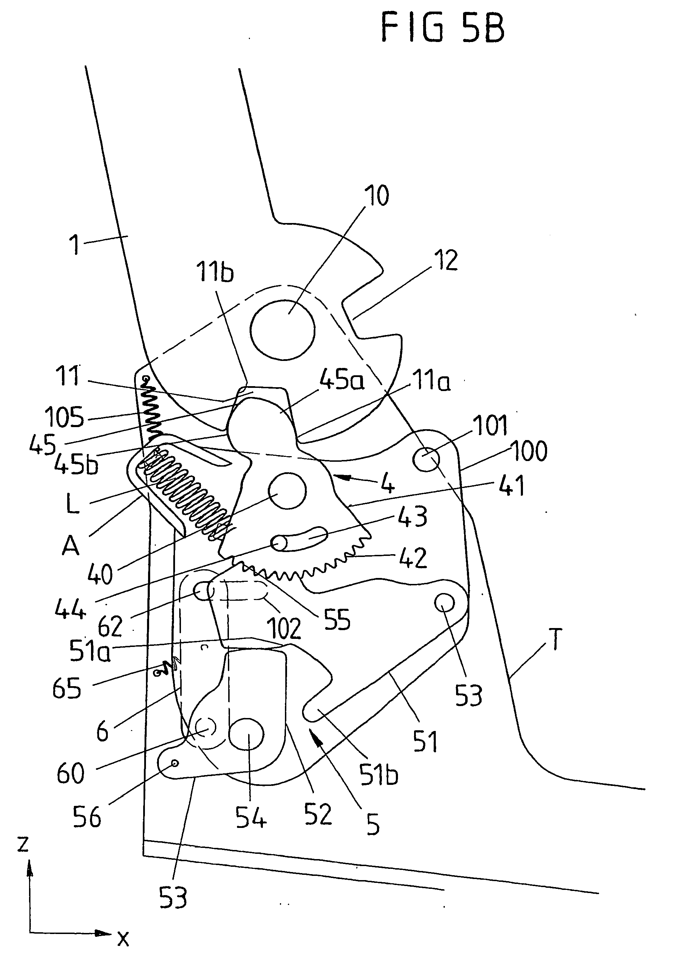

Figur 5b zeigt den Lehnenbeschlag 1 bei maximal entspannter Druckfeder L, durch die der Zahnsegmenthebel 41 maximal entgegen dem Uhrzeigersinn verschwenkt worden ist, wobei die maximale Schwenkbewegung des Zahnsegmenthebels 41 durch das Zusammenwirken seiner Kulisse 43 mit dem an der Basisplatte 100 vorgesehenen Zapfen 44 bestimmt ist. In der entsprechenden, maximal nach vorne geschwenkten Gebrauchsposition des Lehnenbeschlages 1 und damit der Rückenlehne R erstrecken sich diese im Wesentlichen senkrecht entlang der vertikalen Fahrzeugachse. Auch in dieser Neigungsposition sind der Lehnenbeschlag 1 und die Rückenlehne R durch das Zusammenwirken der Oberfläche 45a, 45b des evolventenartigen Hebelabschnittes 45 mit den Seitenwänden 11a, 11b der zugeordneten Aussparung 11 arretiert, wobei der Zahnsegmenthebel 41 durch die Verriegelungseinrichtung 5 verriegelt ist. (Diese Verriegelung des Zahnsegmenthebels 41 war während der Schwenkbewegung, die von dem in Figur 5a gezeigten zu dem in Figur 5b gezeigten Neigungswinkel des Lehnenbeschlages 1 geführt hat, selbstverständlich aufgehoben, wie vorstehend beschrieben.)

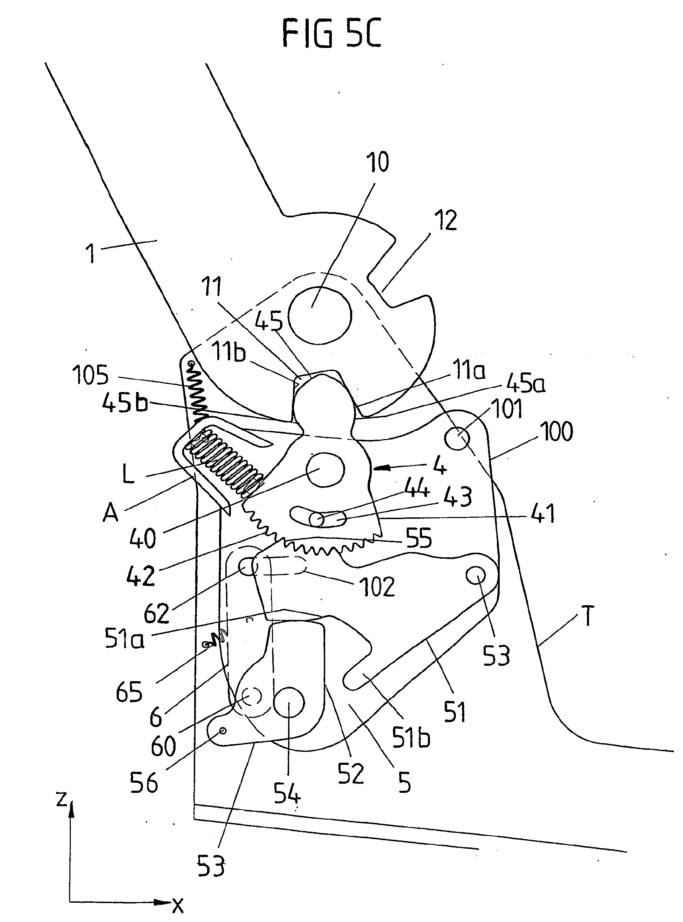

Figur 5c zeigt schließlich den Lehnenbeschlag R in einer mittleren Neigungsposition, mit leicht nach hinten bezüglich der vertikalen Fahrzeugachse z geneigter Ausrichtung. Es handelt sich also um eine mittlere Neigungseinstellung, verglichen mit der gemäß Figur 5a maximal nach hinten geneigtem Lehnenbeschlag und dem gemäß Figur 5b im Wesentlichen senkrecht angeordneten Lehnenbeschlag 1.

Die in Figur 5c dargestellte mittlere Neigungsposition des Lehnenbeschlages 1 und der Rückenlehne R wird dadurch eingenommen, dass der Sitzbenutzer nach dem Entriegeln der Verriegelungseinrichtung 5 kein vollständiges Verschwenken des Lehnenbeschlages 1 in seine in Figur 5b gezeigte vorderste Neigungsposition (mit im Wesentlichen senkrechter Orientierung) zulässt, sondern mit seinem Rücken gegen die Vorderseite V der Rückenlehne R drückt und dadurch die Schwenkbewegung der Rückenlehne R (und des Lehnenbeschlages 1) nach vorne begrenzt. In einer dem Sitzbenutzer angenehmen Neigungsposition der Rückenlehne R wird diese dann verriegelt, indem der Sitzbenutzer mit einem geeigneten Betätigungselement, z.B. in Form eines Bedienhebels, in bekannter Weise die Verriegelungseinrichtung 5 wieder verriegelt, so dass der Zahnsegmenthebel 41 in der dann bestehenden Position arretiert wird und somit auch den Lehnenbeschlag 1 und die Rückenlehne R in der aktuellen Neigungsposition fixiert.

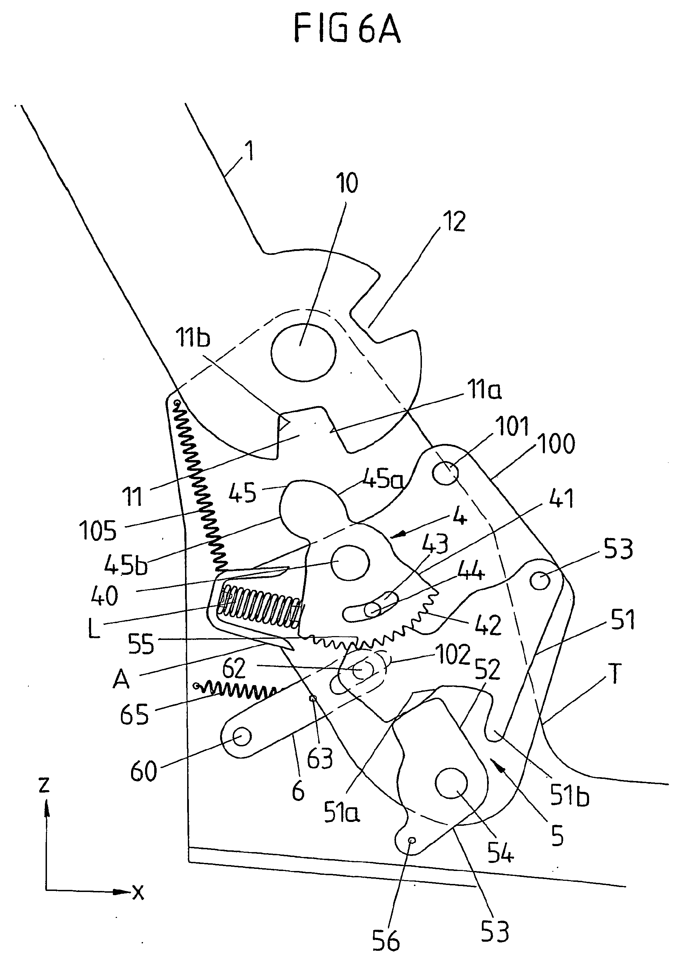

Bei dem anhand der Figuren 5a bis 5c erläuterten Verstellen der Lehnenneigung wirkt die Druckfeder L auf den Lehnenbeschlag 1 und damit die Rückenlehne R jeweils nur indirekt über das als Zahnsegmenthebel 41 ausgebildete Getriebeelement 4 ein, welches wiederum über den evolventenartigen Hebelabschnitt 45 und die zugeordnete Ausnehmung 11 mit dem Lehnenbeschlag 1 in Verbindung steht. Dies eröffnet die Möglichkeit, bei einem Vorklappen der Rückenlehne R in Richtung auf die Sitzfläche F den Einfluss der Druckfeder L ganz auszuschalten, wie nachfolgend anhand der Figuren 6a bis 6c dargestellt werden wird.

Hierzu ist der zum Vorklappen der Rückenlehne auf die Sitzfläche in bekannter Weise an der Rückenlehne vorgesehene Entriegelungshebel, z.B. über einen Bowdenzug, mit dem Sperrhebel 6 der Basisplatte 100 verbunden, wozu ein entsprechender Kraftangriffspunkt 63 an dem Sperrhebel 6 vorgesehen ist. Die Betätigung des Entriegelungshebels der Rückenlehne hat zur Folge, dass der Sperrhebel 6 um seine Lagerstelle 60 (im Uhrzeigersinn) verschwenkt wird, wobei sich das am Sperrhebel 60 vorgesehene Führungselement 62 entlang des in der Basisplatte 100 vorgesehenen, geradlinigen Langlochs 102 bewegt und hierdurch eine Schwenkbewegung der Basisplatte 100 entgegen dem Uhrzeigersinn auslöst, wie in Figur 6a dargestellt. Die Schwenkbewegungen des Sperrhebels 6 und der Basisplatte 100 erfolgen dabei jeweils entgegen der Vorspannkraft des jeweils zugeordneten, als Rückstellfeder wirkenden Federelementes 65 bzw. 105.

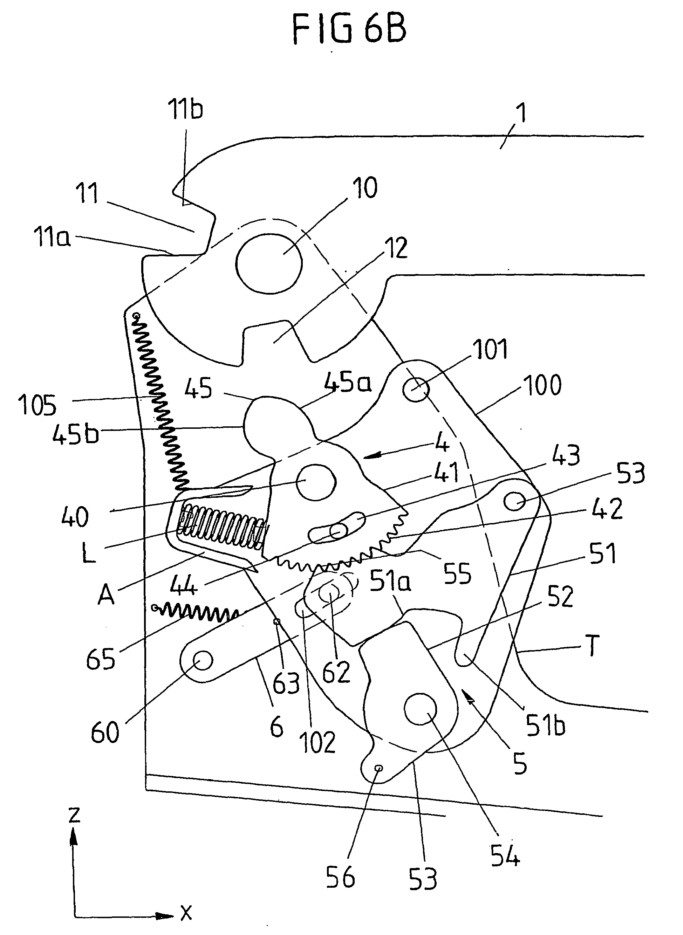

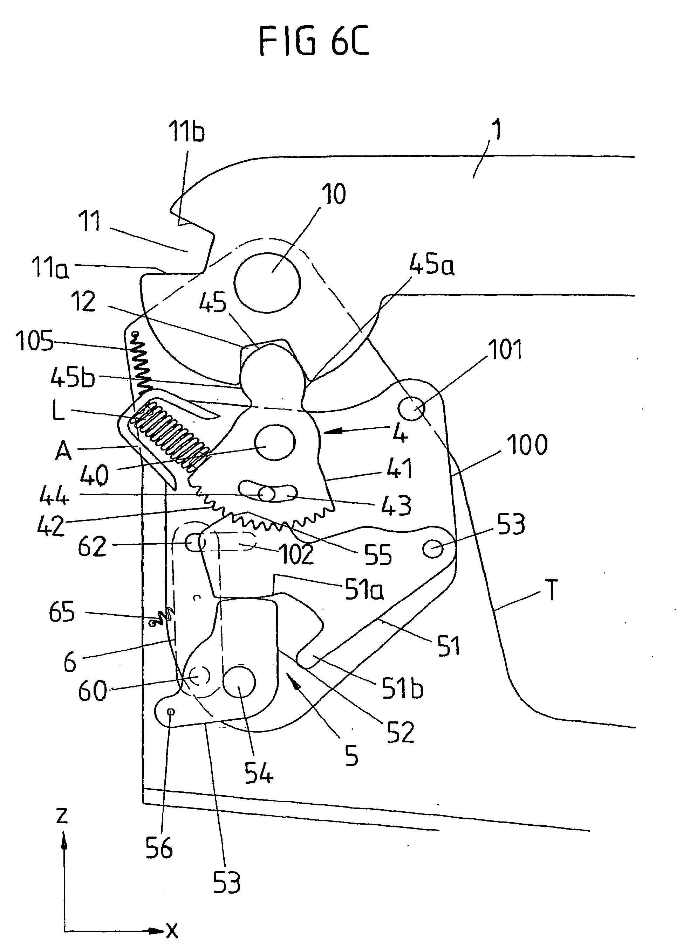

Wie anhand der Figur 6a erkennbar, wird durch das Verschwenken der Basisplatte 100 der Zahnsegmenthebel 41 von dem unteren Ende des Lehnenbeschlages 1 entfernt, so dass dessen evolventenartiger Hebelabschnitt 45 außer Eingriff mit der zugeordneten Ausnehmung 11 des Lehnenbeschlages 1 gerät. Hierdurch ist der Lehnenbeschlag 1 von dem Zahnsegmenthebel 41 und von der dem Zahnsegmenthebel 41 zugeordneten Druckfeder L entkoppelt. In diesem Zustand kann die Rückenlehne R zusammen mit dem Lehnenbeschlag 1 nach vorne in Richtung auf die Sitzfläche F des entsprechenden Fahrzeugsitzes (vgl. Figur 4) geklappt werden, wie in Figur 6b dargestellt. Wird im vorgeklappten Zustand der Rückenlehne und des Lehnenbeschlages 1 die Betätigung des Sperrhebels 6 über den entsprechenden Entriegelungshebel der Rückenlehne R aufgehoben, so kehren unter der Wirkung der als Rückstellfeder wirkenden Federelemente 65, 105 der Sperrhebel 6 und die Basisplatte 100 wieder in ihre Ausgangslage zurück, in der der Zahnsegmenthebel 41 unmittelbar unterhalb des unteren Endes des Lehnenbeschlages 1 angeordnet ist. Dabei greift der evolventenartige Hebelabschnitt 45 in eine weitere Ausnehmung 12 des Lehnenbeschlages 1 ein, so dass der Lehnenbeschlag 1 und damit die Rückenlehne R in ihrer vorgeklappten Position verriegelt sind, wie in Figur 6c dargestellt.

Für ein Zurückklappen der Rückenlehne R aus der vorgeklappten Position heraus in eine im Wesentlichen aufrechte, ggf. gegenüber der Senkrechten nach hinten geneigte, Gebrauchsposition muss dann ggf. zunächst wieder der Sperrhebel 6 betätigt werden, um eine Schwenkbewegung der Basisplatte 100 auszulösen, durch die der Lehnenbeschlag 1 freigegeben wird.

Bei dem anhand der Figuren 6a bis 6c dargestellten Ausführungsbeispielen wird also der Lehnebeschlag 1 beim Vorklappen der Rückenlehne R auf die Sitzfläche F sowie bei einem späteren Zurückklappen der Rückenlehne R in eine Gebrauchsposition vollständig, körperlich außer Eingriff mit dem Zahnsegmenthebel 41 gebracht, um sicherzustellen, dass die am Zahnsegmenthebel 41 einwirkende Druckfeder L das Umklappen der Rückenlehne R nicht beeinflusst. Dies steht im Gegensatz zu dem anhand der Figuren 2 und 3 dargestellten Ausführungsbeispiel, bei dem der Zahnsegmenthebel 41 auch beim Umklappen der Rückenlehne R weiterhin über Hebelelemente 21, 23 mit dem Lehnenbeschlag 1 verbunden ist, dabei jedoch gleichzeitig mittels der den Hebelelementen 21, 23 zugeordneten Längsführung 20 von diesen entkoppelt ist, damit das Umklappen der Rückenlehne R unabhängig von einer Bewegung des Zahnsegmenthebels 41 erfolgen kann, wie weiter oben anhand der Figuren 2 und 3 erläutert worden war.

Die Neigungseinstellung der Rückenlehne R entspricht nach deren Zurückklappen in die Gebrauchsposition genau der Neigungseinstellung vor dem Umklappen auf die Sitzfläche F.

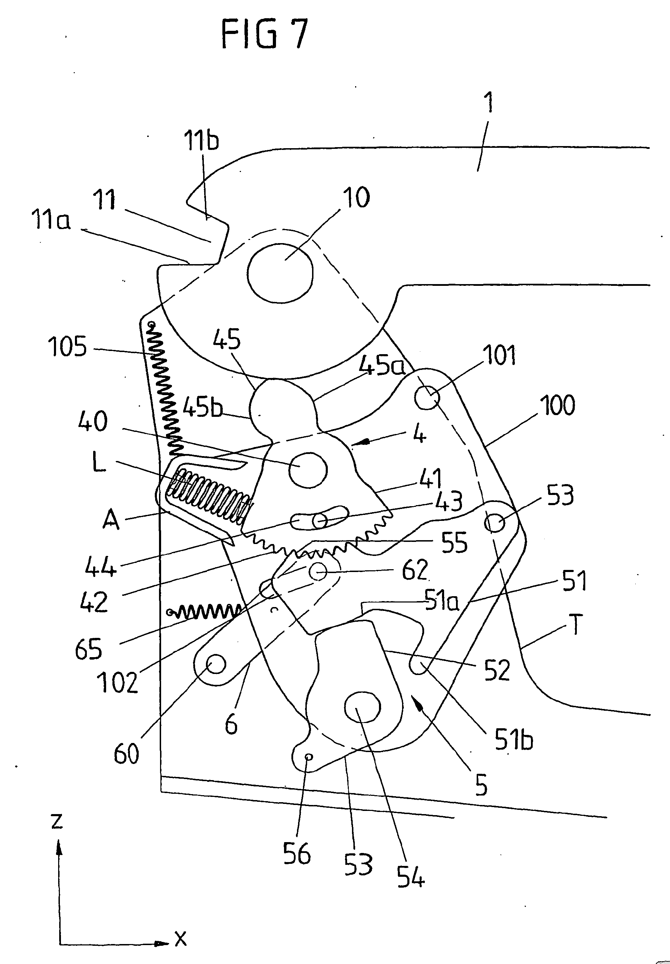

Figur 7 zeigt eine Abwandlung der Anordnung aus den Figuren 5a bis 5c und 6a bis 6c, wobei der Unterschied darin besteht, dass der Lehnenbeschlag 1 keine zweite Ausnehmung 12 aufweist, in die der Zahnsegmenthebel 41 mit seinen Hebelabschnitt 45 mit evolventenartiger Oberfläche 45a, 45b eingreifen kann. Die Rückenlehne R ist dann in ihrer auf die Sitzfläche F vorgeklappten Lage nicht verriegelt (und kann somit jede gewünschte Position einnehmen).

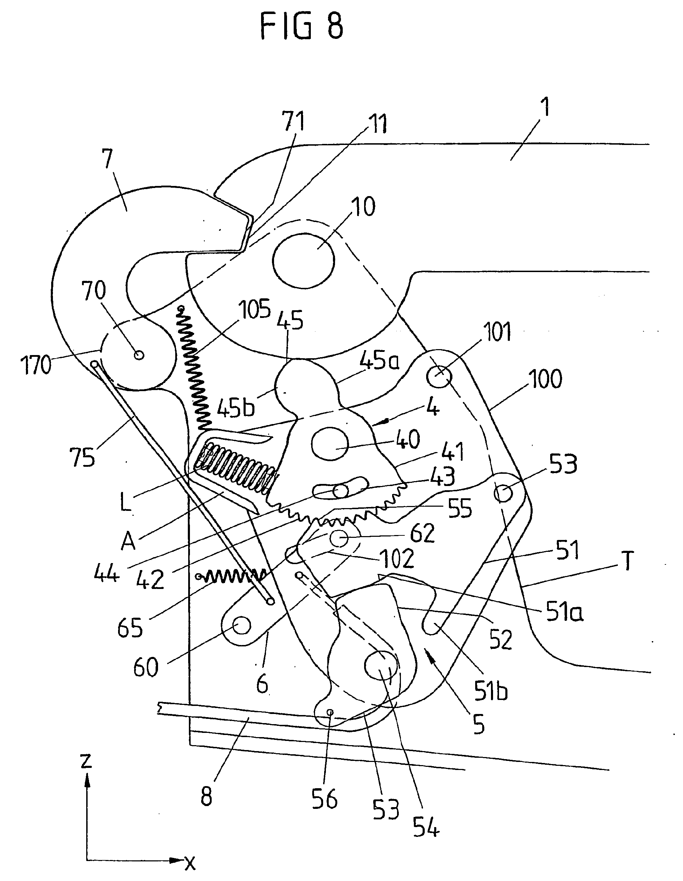

Figur 8 zeigt eine weitere Abwandlung der Anordnung aus den Figuren 6a bis 6b, wobei der Unterschied darin besteht, dass ein separates Verriegelungselement 7 zur Verriegelung des Lehnebeschlages 1 in der vorgeklappten Position der Rückenlehne R vorgesehen ist. Dieses Verriegelungselement 7 ist als Verriegelungshebel ausgebildet und um eine Lagerstelle 70 verschwenkbar an einem Fortsatz 170 der Basisplatte 100 gelagert. Es ist mit einem Koppelelement 75 in Form einer Koppelstange mit dem Sperrhebel 6 gekoppelt, so dass bei einem Verschwenken des Sperrhebels 6, das einem Vorklappen der Rückenlehne R und des Lehnenbeschlages 1 entspricht, der Verriegelungshebel 7 derart um seine Lagerstelle 70 verschwenkt wird, dass er mit seinem vorderen Endabschnitt 71 in eine zugeordnete Aussparung 11 des Lehnenbeschtages1 eingreift. Hierbei kann es sich um dieselbe Aussparung 11 handeln, die bei in Gebrauchsposition befindlicher, im Wesentlichen aufrechter oder leicht nach hinten geneigter Rückenlehne R, dem Zahnsegmenthebel 41 zugeordnet ist.

Der Vorteil der in Figur 8 gezeigten Anordnung liegt darin, dass die Rückenlehne R und der Lehnenbeschlag 1 in vorgeklappten Zustand mittels des Verriegelungshebels 7 stets in der gleichen, im Wesentlichen waagerechten Position verriegelt werden. Demgegenüber hängt bei der anhand der Figuren 6a bis 6c dargestellten Anordnung die genaue Position der vorgeklappten Rückenlehne R von der Winkellage des mittels der Verriegelungseinrichtung 5 arretierten Zahnsegmenthebels 41 ab, der ja zur Verriegelung der Rückenlehne R in vorgeklapptem Zustand mit einem Hebelabschnitt 45 in eine zugeordnete Aussparung 12 des Lehnenbeschlages 1 eingreift.

In Figur 8 ist ferner ein Bowdenzug 8 dargestellt, der sich von dem Sperrhebel 6 zu einer Entriegelungseinrichtung für die Sitzlängsverstellung des entsprechenden Kraftfahrzeugsitzes erstreckt. Dieser Bowdenzug wird beim Verschwenken des Sperrhebels 6 im Zusammenhang mit dem Vorklappen der Rückenlehne R auf die Sitzfläche F betätigt und führt zu einer Entriegelung der Sitzlängsverstellung des Kraftfahrzeugsitzes, so dass dieser zur Ausführung einer so genannten Easy-Entry-Funktion in Sitzlängsrichtung verschoben werden kann.

## Patentansprüche

1. Kraftfahrzeugsitz mit
- einer in ihrer Neigung einstellbaren, schwenkbar gelagerten Rückenlehne (R), die eine zum Abstützen des Rückens eines Sitzbenutzers dienende Vorderseite (V) aufweist, und
- einer Federanordnung (D,L) mit mindestens einem elastischen Element (D), mit dem die Rückenlehne (R) derart elastisch vorgespannt ist, dass sie die Tendenz hat, nach vorne zu schwenken und sich mit ihrer Vorderseite (V) an den Rücken des Sitzbenutzers anzulegen,
wobei die Neigung der Rückenlehne (R) durch Krafteinwirkung auf deren Vorderseite entgegen der Wirkung der Federanordnung (D,L) verstellbar ist,
**dadurch gekennzeichnet,**
**dass** die Federanordnung (D, L) an einem Getriebeelement (4) angreift, das mit der Rückenlehne (R) gekoppelt ist und dem eine Verriegelungseinrichtung (5) zugeordnet ist, mit der das Getriebeelement (4) in unterschiedlichen Lagen verriegelbar ist.

2. Kraftfahrzeugsitz nach Anspruch 1, **dadurch gekennzeichnet, dass** die Rückenlehne im verriegelten Zustand der Verriegelungseinrichtung (5) in ihrer jeweiligen Neigungsposition arretiert ist.

3. Kraftfahrzeugsitz nach Anspruch 1 oder 2, **dadurch gekennzeichnet, dass** die Neigung der Rückenlehne (R) im entriegelten Zustand der Verriegelungseinrichtung (5) verstellbar ist.

4. Kraftfahrzeugsitz nach Anspruch 3, **dadurch gekennzeichnet, dass** die Rückenlehne (R) unter Einwirkung der Federanordnung (D, L) auf das Getriebeelement (4) nach vorne verschwenkt werden kann.

5. Kraftfahrzeugsitz nach Anspruch 3 oder 4, **dadurch gekennzeichnet, dass** die Rückenlehne (R) unter der Einwirkung einer Druckkraft auf deren Vorderseite (V) entgegen der Wirkung der Federanordnung (D, L) nach hinten verschwenkt werden kann.

6. Kraftfahrzeugsitz nach einem der vorhergehenden Ansprüche, **dadurch gekennzeichnet, dass** das Getriebeelement (4) Bestandteil einer Getriebeanordnung (2, 4), insbesondere einer Hebelanordnung, ist, über die die Federanordnung (D, L) mit der Rückenlehne (R) gekoppelt ist.

7. Kraftfahrzeugsitz nach Anspruch 6, **dadurch gekennzeichnet, dass** die Getriebeanordnung (2, 4) zur Übersetzung eines von der Federanordnung (D. L) auf das Getriebeelement (4) ausgeübten Drehmomentes dient.

8. Kraftfahrzeugsitz nach einem der vorhergehenden Ansprüche, **dadurch gekennzeichnet, dass** dem Getriebeelement (4) eine Kupplung (20, 21; 6, 100) zugeordnet ist, mittels der die Rückenlehne (R) von dem Getriebeelement (4) derart entkoppelbar ist, dass die Rückenlehne (R) in Richtung auf die Sitzfläche (F) des Kraftfahrzeugsitzes vorklappbar ist, ohne dass das Getriebeelement (4) bewegt wird.

9. Kraftfahrzeugsitz nach Anspruch 8, **dadurch gekennzeichnet, dass** die Rückenlehne (R) bei Entkopplung von dem Getriebeelement (4) von der Federanordnung (D, L) entkoppelt ist, so dass diese nicht auf die Rückenlehne (R) einwirkt.

10. Kraftfahrzeugsitz nach einem der vorhergehenden Ansprüche, **dadurch gekennzeichnet, dass** dem Getriebeelement (4) eine Kupplung (20, 21; 6, 100) zugeordnet ist, mittels der die Rückenlehne (R) von dem Getriebeelement (4) derart entkoppelbar ist, dass die Rückenlehne (R) in Richtung auf die Sitzfläche vorklappbar ist, wenn das Getriebeelement (4) mittels einer Verriegelungseinrichtung (5) verriegelt ist.

11. Kraftfahrzeugsitz nach einem der vorhergehenden Ansprüche, **dadurch gekennzeichnet, dass** die Schwenkachse der Rückenlehne (R) zur Entkopplung der Rückenlehne (R) von dem Getriebeelement (4) beim Vorklappen der Rückenlehne (R) entlang einer vorgegebenen Bahn (20) bewegt wird, welche vorzugsweise derart ausgebildet ist, dass durch die Bewegung der Schwenkachse entlang der Bahn (20) eine Rückwirkung der Schwenkbewegung der Rückenlehne (R) auf das Getriebeelement (4) verhindert wird.

12. Kraftfahrzeugsitz nach Anspruch 11, **dadurch gekennzeichnet, dass** die Bahn (20) durch eine Führungseinrichtung gebildet wird, in der die Schwenkachse linksbeweglich geführt wird.

13. Kraftfahrzeugsitz nach einem der Ansprüche 8 bis 10, **dadurch gekennzeichnet, dass** das Getriebeelement (4) mit der Rückenlehne (R) außer Eingriff bringbar ist, so dass das Getriebeelement (4) nicht mit der Rückenlehne (R) in Verbindung steht.

14. Kraftfahrzeugsitz nach Anspruch 13, **dadurch gekennzeichnet, dass** das Getriebeelement (4) auf einer Basisplatte (100) angeordnet ist, die derart bewegbar, insbesondere verschwenkbar ist, dass das Getriebeelement (4) außer Eingriff mit der Rückenlehne (R) gerät.

15. Kraftfahrzeugsitz nach Anspruch 14, **dadurch gekennzeichnet, dass** die Basisplatte (100) mittels eines Federelementes (105) in eine Lage vorgespannt

16. Kraftfahrzeugsitz nach Anspruch 14 oder 15, **dadurch gekennzeichnet, dass** der Basisplatte (100) ein Sperrhebel (6) zugeordnet ist, mittels dem die Basisplatte (100) in einer Lage arretierbar ist, in der sich das Getriebeelement (4) mit der Rückenlehne (R) in Eingriff befindet.

17. Kraftfahrzeugsitz nach einem der Ansprüche 14 bis 16, **dadurch gekennzeichnet, dass** die Basisplatte (100) durch Betätigung des Sperrhebels (6) in eine Lage bringbar ist, in der das Getriebeelement (4) außer Eingriff mit der Rückenlehne (R) steht.

18. Kraftfahrzeugsitz nach einem der Ansprüche 8 bis 17, **dadurch gekennzeichnet, dass** Sperrmittel (3, 6) vorgesehen sind, mittels der die Kupplung (20, 21; 6, 100) in einem Zustand verriegelbar ist, in der das Getriebeelement (4) mit der Rückenlehne (R) gekoppelt ist.

19. Kraftfahrzeugsitz nach einem der Ansprüche 8 bis 18, **dadurch gekennzeichnet, dass** Sperrmittel (3, 6) vorgesehen sind, mittels der die Kupplung (20, 21; 6, 100) in einem Zustand verriegelbar ist, in der das Getriebeelement (4) von der Rückenlehne (R) entkoppelt ist.

20. Kraftfahrzeugsitz nach Anspruch 11 oder 12 und Anspruch 18 oder 19, **dadurch gekennzeichnet, dass** die Sperrmittel (3) an der Schwenkachse der Rückenlehne (R) angreifen und deren Bewegung entlang der Bahn (20) verhindern.

21. Kraftfahrzeugsitz nach Anspruch 20, **dadurch gekennzeichnet, dass** die Sperrmittel (3) durch einen Hebel gebildet werden.

22. Kraftfahrzeugsitz nach Anspruch 13 oder 14 und Anspruch 18 oder 19, **dadurch gekennzeichnet, dass** die Sperrmittel (6) an der Basisplatte (100) angreifen, um deren Bewegung zu verhindern.

23. Kraftfahrzeugsitz nach Anspruch 22, **dadurch gekennzeichnet, dass** die Sperrmittel (6) durch einen in einem Langloch (102) der Basisplatte geführten Hebel gebildet werden, der in Richtung auf den verriegelten Zustand elastisch vorgespannt ist.

24. Kraftfahrzeugsitz nach einem der vorhergehenden Ansprüche, **dadurch gekennzeichnet, dass** die Verriegelungseinrichtung (5) des Getriebeelementes (4) ein primäres Verriegelungselement (51) und ein sekundäres Verriegelungselement (52) aufweist, wobei das primäre Verriegelungselement (51) im verriegelten Zustand an dem Getriebeelement (4) angreift und das sekundäre Verriegelungselement (52) das primäre Verriegelungselement (51) im verriegelten Zustand blockiert.

25. Kraftfahrzeugsitz nach einem der vorhergehenden Ansprüche, **dadurch gekennzeichnet, dass** das Getriebeelement (4) durch einen Zahnsegmenthebel (41) gebildet wird.

26. -Kraftfahrzeugsitz nach einem der vorhergehenden Ansprüche, **dadurch gekennzeichnet, dass** die Federanordnung (D, L) ein Federelement aufweist, das an dem Getriebeelement (4) angreift.

27. Kraftfahrzeugsitz nach einem der vorhergehenden Ansprüche, **dadurch gekennzeichnet, dass** das Getriebeelement (4) über eine Verzahnung (42) mit der Verriegelungseinrichtung (5) in Eingriff bringbar ist.

## Claims

1. Motor vehicle seat with
- a pivotally mounted backrest (R) which can be adjusted in its inclination and which has a front face (V) serving to support the back of a seat user, and
- a spring assembly (D, L) with at least one elastic element (D) with which the backrest (R) is elastically pretensioned so that it has the tendency to pivot forwards and to bear with its front face (V) against the back of the seat user,
whereby the incline of the backrest (R) can be adjusted through the action of force on the front face thereon against the action of the a spring assembly (D, L),
**characterised in that**
the spring assembly (D, L) engages on a gear element (4) which is coupled to the backrest (R) and which is associated with a locking device (5) with which the gear element (4) can be locked in different positions.

2. Motor vehicle seat according to claim 1, **characterised in that** the backrest is locked in its relevant inclined position in the locked state of the locking device (5).

3. Motor vehicle seat according to claim 1 or 2, **characterised in that** the incline of the backrest (R) is adjustable in the unlocked state of the locking device (5).

4. Motor vehicle seat according to claim 3, **characterised in that** the backrest (R) can be pivoted forwards under the action of the spring assembly (D, L) on the gear element (4).

5. Motor vehicle seat according to claim 3 or 4, **characterised in that** the backrest (R) can be pivoted backwards under the action of a compression force on the front face (V) against the action of the spring assembly (D, L).

6. Motor vehicle seat according to one of the preceding claims, **characterised in that** the gear element (4) is a constituent part of a gear assembly (2, 4), more particularly a lever assembly through which the spring assembly (D, L) is coupled to the backrest (R).

7. Motor vehicle seat according to claim 6, **characterised in that** the gear assembly (2, 4) serves to translate a torque exerted by the spring assembly (D, L) on the gear element (4).

8. Motor vehicle seat according to one of the preceding claims, **characterised in that** the gear element (4) is assigned a clutch (20, 21; 6,100) by means of which the backrest (R) can be uncoupled from the gear element (4) so that the backrest (R) can be folded forwards towards the seat surface (F) of the motor vehicle seat without the gear element (4) being moved.

9. Motor vehicle seat according to claim 8, **characterised in that** the backrest (R) during uncoupling from the gear element (4) is uncoupled from the spring assembly (D, L) so that this does not act on the backrest (R).

10. Motor vehicle seat according to one of the preceding claims, **characterised in that** the gear element (4) is assigned a clutch (20, 21; 6, 100) by means of which the backrest (R) can be uncoupled from the gear element (4) so that the backrest (R) can be folded forwards towards the seat surface when the gear element (4) is locked by means of a locking device (5).

11. Motor vehicle seat according to one of the preceding claims, **characterised in that** the pivotal axis of the backrest (R) in order to uncouple the backrest (R) from the gear element (4) as the backrest (R) is folded forwards is moved along a predetermined path (20) which is preferably designed so that a reaction of the pivotal movement of the backrest (R) on the gear element (4) is prevented.

12. Motor vehicle seat according to claim 11, **characterised in that** the path (20) is formed by a guide device in which the pivotal axis is guided to move left .

13. Motor vehicle seat according to one of the claims 8 to 10, **characterised in that** the gear element (4) can be brought out of engagement with the backrest (R) so that the gear element (4) is not in connection with the backrest (R).

14. Motor vehicle seat according to claim 13, **characterised in that** the gear element (4) is mounted on a base plate (100) which is movable, more particularly pivotally, so that the gear element (4) moves out of engagement with the backrest (R).

15. Motor vehicle seat according to claim 14, **characterised in that** the base plate (100) is pretensioned by means of a spring element (105) into one position .

16. Motor vehicle seat according to claim 14 or 15, **characterised in that** the base plate (100) is assigned a locking lever (6) by means of which the base plate (100) can be locked in a position in which the gear element (4) engages with the backrest (R).

17. Motor vehicle seat according to one of claims 14 to 16, **characterised in that** the base plate (100) can be brought by actuation of the locking lever (6) into a position in which the gear element (4) is out of engagement with the backrest (R).

18. Motor vehicle seat according to one of claims 8 to 17, **characterised in that** locking means (3, 6) are provided by means of which the clutch (20, 21; 6, 100) can be locked in a state in which the gear element (4) is coupled to the backrest (R).

19. Motor vehicle seat according to one of claims 8 to 18, **characterised in that** locking means (3, 6) are provided by means of which the clutch (20, 21; 6, 100) can be locked in a state in which the gear element (4) is uncoupled from the backrest (R).

20. Motor vehicle seat according to claim 11 or 12 and claim 18 or 19, **characterised in that** the locking means (3) engage on the pivotal axis of the backrest (R) and prevent its movement along the path (20).

21. Motor vehicle seat according to claim 20, **characterised in that** the locking means (3) are formed by a lever.

22. Motor vehicle seat according to claim 13 or 14 and claim 18 or 19, **characterised in that** the locking means (6) engage on the base plate (100) in order to prevent the movement thereof.

23. Motor vehicle seat according to claim 22, **characterised in that** the locking means (6) are formed by a lever guided in an oblong hole (102) of the base plate and pretensioned elastically towards the locked state.

24. Motor vehicle seat according to one of the preceding claims, **characterised in that** the locking device (5) of the gear element (4) has a primary locking element (51) and a secondary locking element (52) whereby the primary locking element (51) in the locked state engages on the gear element (4) and the secondary locking element (52) blocks the primary locking element (51) in the locked state.

25. Motor vehicle seat according to one of the preceding claims, **characterised in that** the gear element (4) is formed by a toothed segment lever (41).

26. Motor vehicle seat according to one of the preceding claims, **characterised in that** the spring assembly (D, L) has a spring element which engages on the gear element (4).

27. Motor vehicle seat according to one of the preceding claims, **characterised in that** the gear element (4) can be brought into engagement with the locking device (5) through toothed gearing (42).

## Revendications

1. Siège de véhicule automobile, comprenant :
- un dossier (R) réglable quant à son inclinaison, monté en pivotement, qui présente un côté antérieur (V) servant à soutenir le dos d'un utilisateur, et
- un agencement à ressort (D, L) avec au moins un élément élastique (D) au moyen duquel le dossier (R) est précontraint de manière élastique de telle façon qu'il a tendance à pivoter vers l'avant et à s'appliquer par son côté antérieur (V) contre le dos de l'utilisateur du siège,
dans lequel l'inclinaison du dossier (R) est réglable par application d'une force sur son côté antérieur à l'encontre de l'action de l'agencement à ressort (D, L),
**caractérisé en ce que**
l'agencement à ressort (D, L) vient en appui sur un élément de transmission (4) qui est couplé avec le dossier (R) et auquel est associé un système de verrouillage (5) au moyen duquel l'élément de transmission (4) peut être verrouillé dans des positions différentes.

2. Siège de véhicule selon la revendication 1, **caractérisé en ce que** le dossier est arrêté, dans l'état verrouillé du système de verrouillage (5), dans sa position d'inclinaison respective.

3. Siège de véhicule selon la revendication 1 ou 2, **caractérisé en ce que** l'inclinaison du dossier (R) est réglable dans l'état déverrouillé du système de verrouillage (5).

4. Siège de véhicule selon la revendication 3, **caractérisé en ce que** le dossier (R) peut être pivoté vers l'avant sous l'action de l'agencement à ressort (D, L) sur l'élément de transmission (4).

5. Siège de véhicule selon la revendication 3 ou 4, **caractérisé en ce que** le dossier (R) peut être pivoté vers l'arrière sous l'action d'une force de poussée sur son côté avant (V) à l'encontre de l'action de l'agencement à ressort (D, L).

6. Siège de véhicule selon l'une des revendications précédentes, **caractérisé en ce que** l'élément de transmission (4) est un composant d'un agencement de transmission (2, 4), en particulier d'un agencement à levier, via lequel l'agencement à ressort (D, L) est couplé au dossier (R).

7. Siège de véhicule selon la revendication 6, **caractérisé en ce que** l'agencement de transmission (2, 4) sert à la démultiplication d'un couple de rotation exercé par l'agencement à ressort (D, L) sur l'élément de transmission (4).

8. Siège de véhicule selon l'une des revendications précédentes, **caractérisé en ce qu'**un accouplement (20, 21 ; 6, 100) est associé à l'élément de transmission (4), au moyen duquel le dossier (R) peut être découplé de l'élément de transmission (4) de telle manière que le dossier (R) peut être rabattu en direction de la surface d'assise (F) du siège de véhicule, sans que l'élément de transmission (4) soit déplacé.

9. Siège de véhicule selon la revendication 8, **caractérisé en ce que** le dossier (R) est découplé lors du découplage de l'élément de transmission (5) vis-à-vis de l'agencement à ressort (D, L), de sorte que celui-ci n'agit pas sur le dossier (R).

10. Siège de véhicule selon l'une des revendications précédentes, **caractérisé en ce qu'**un accouplement (20, 21 ; 6, 100) est associé à l'élément de transmission (4), au moyen duquel le dossier (R) peut être découplé de l'élément de transmission (4) de telle manière que le dossier (R) peut être rabattu en direction de la surface d'assise, quand l'élément de transmission (4) est verrouillé au moyen du système de verrouillage (5).

11. Siège de véhicule selon l'une des revendications précédentes, **caractérisé en ce que** l'axe de pivotement du dossier (R) pour le découplage du dossier (R) vis-à-vis de l'élément de transmission (4) lors du rabattement du dossier (R) est déplacé le long d'une trajectoire prédéterminée (20), laquelle est de préférence réalisée de telle manière que grâce au déplacement de l'axe de pivotement le long de la trajectoire (20) on empêche un effet en retour du mouvement de pivotement du dossier (R) vers l'élément de transmission (14).

12. Siège de véhicule selon la revendication 11, **caractérisé en ce que** la trajectoire (20) est formée par un système de guidage dans lequel l'axe de pivotement est guidé avec possibilité de déplacement vers la gauche.

13. Siège de véhicule selon l'une des revendications 8 à 10, **caractérisé en ce que** l'élément de transmission (4) peut être amené hors d'un engagement avec le dossier (R), de sorte que l'élément de transmission (4) n'est pas en liaison avec le dossier (R).

14. Siège de véhicule selon la revendication 13, **caractérisé en ce que** l'élément de transmission (4) est agencé sur une plaque de base (100), qui est déplaçable, en particulier par pivotement, de telle manière que l'élément de transmission (4) parvient hors d'engagement avec le dossier (R).

15. Siège de véhicule selon la revendication 14, **caractérisé en ce que** la plaque de base (100) est précontrainte au moyen d'un élément à ressort (105) jusque dans une position.

16. Siège de véhicule selon la revendication 14 ou 15, **caractérisé en ce qu'**un levier de blocage (6) est associé à la plaque de base (100), au moyen duquel la plaque de base (100) peut être arrêtée dans une position dans laquelle l'élément de transmission (4) se trouve en engagement avec le dossier (R).

17. Siège de véhicule selon l'une des revendications 14 à 16, **caractérisé en ce que** la plaque de base (100) peut être amenée par actionnement du levier de blocage (6) jusque dans une position dans laquelle l'élément de transmission (4) est hors d'engagement avec le dossier (R).

18. Siège de véhicule selon l'une des revendications 8 à 17, **caractérisé en ce que** des moyens de blocage (3, 6) sont prévus, au moyen desquels l'accouplement (20, 21 ; 6, 100) est susceptible d'être verrouillé dans un état dans lequel l'élément de transmission (4) est couplé avec le dossier (R).

19. Siège de véhicule selon l'une des revendications 8 à 18, **caractérisé en ce que** des moyens de blocage (3, 6) sont prévus, au moyen desquels l'accouplement (20, 21 ; 6, 100) est susceptible d'être verrouillé dans un état dans lequel l'élément de transmission (4) est découplé du dossier (R).

20. Siège de véhicule selon la revendication 11 ou 12 et la revendication 18 ou 19, **caractérisé en ce que** les moyens de blocage (3) attaquent au niveau de l'axe de pivotement du dossier (R) et empêchent son mouvement le long de la trajectoire (20).

21. Siège de véhicule selon la revendication 20, **caractérisé en ce que** les moyens de blocage (3) sont formés par un levier.

22. Siège de véhicule selon la revendication 13 ou 14 et la revendication 18 ou 19, **caractérisé en ce que** les moyens de blocage (6) attaquent la plaque de base (100) pour empêcher son mouvement.

23. Siège de véhicule selon la revendication 22, **caractérisé en ce que** les moyens de blocage (6) sont formés par un levier guidé dans un trou oblong (102) de la plaque de base et précontraint élastiquement en direction de l'état verrouillé.

24. Siège de véhicule selon l'une des revendications précédentes, **caractérisé en ce que** le système de verrouillage (5) de l'élément de transmission (4) comprend un élément de verrouillage primaire (51) et un élément de verrouillage secondaire (52), l'élément de verrouillage primaire (51) attaquant à l'état verrouillé l'élément de transmission (4), et l'élément de verrouillage secondaire (52) bloquant l'élément de verrouillage primaire (51) dans l'état verrouillé.

25. Siège de véhicule selon l'une des revendications précédentes, **caractérisé en ce que** l'élément de transmission (4) est formé par un levier à secteur denté (41).

26. Siège de véhicule selon l'une des revendications précédentes, **caractérisé en ce que** l'agencement à ressort (D, L) comprend un élément à ressort qui vient en appui sur l'élément de transmission (4).

27. Siège de véhicule selon l'une des revendications précédentes, **caractérisé en ce que** l'élément de transmission (4) peut être amené via une denture (42) en engagement avec le système de verrouillage (5).
